# EUROPÄISCHE PATENTSCHRIFT

(11) **EP 2 768 130 B1**
(45) Veröffentlichungstag und Bekanntmachung des Hinweises auf die Patenterteilung: **08.01.2020**
(21) Anmeldenummer: 13155717.5
(22) Anmeldetag: 19.02.2013
(51) Int. Cl.: H02M 3/158

(54) **Gleichspannungswandler**
Direct current converter
Convertisseur de tension continue

(43) Veröffentlichungstag der Anmeldung: 20.08.2014
(73) Patentinhaber: Valeo Siemens eAutomotive Germany GmbH, 91056 Erlangen (DE)
(72) Erfinder: Göpfrich, Kurt, 91058 Erlangen (DE); Völkel, Stefan, 91058 Erlangen (DE)
(74) Vertreter: Dr. Gassner & Partner mbB

(56) Entgegenhaltungen:
- EP-A2- 2 421 135
- DE-A1-102006 014 780
- US-A1- 2009 322 148
- US-A1- 2011 144 861
- US-A1- 2012 169 126
- HONGYANG WU ET AL: "Single Phase Three-Level Power Factor Correction Circuit With Passive Lossless Snubber", IEEE TRANSACTIONS ON POWER ELECTRONICS, IEEE SERVICE CENTER, PISCATAWAY, NJ, US, Bd. 17, Nr. 6, 1. November 2002 (2002-11-01), XP011078252, ISSN: 0885-8993
- PETAR J GRBOVICÌ ET AL: "A Bidirectional Three-Level DCâ DC Converter for the Ultracapacitor Applications", IEEE TRANSACTIONS ON INDUSTRIAL ELECTRONICS, IEEE SERVICE CENTER, PISCATAWAY, NJ, USA, Bd. 57, Nr. 10, 1. Oktober 2010 (2010-10-01), Seiten 3415-3430, XP011298938, ISSN: 0278-0046
- XINBO RUAN ET AL: "Fundamental Considerations of Three-Level DCâ DC Converters: Topologies, Analyses, and Control", IEEE TRANSACTIONS ON CIRCUITS AND SYSTEMS I: REGULAR PAPERS, IEEE, US, Bd. 55, Nr. 11, 1. Dezember 2008 (2008-12-01), Seiten 3733-3743, XP011333338, ISSN: 1549-8328, DOI: 10.1109/TCSI.2008.927218
- ROB M CUZNER ET AL: "Implementation of a Non-Isolated Three Level DC/DC Converter Suitable for High Power Systems", INDUSTRY APPLICATIONS CONFERENCE, 2007. 42ND IAS ANNUAL MEETING. CONFE RENCE RECORD OF THE 2007 IEEE, IEEE, PI, 1. September 2007 (2007-09-01), Seiten 2001-2008, XP031146194, ISBN: 978-1-4244-1259-4
- YU DU ET AL: "Review of non-isolated bi-directional DC-DC converters for plug-in hybrid electric vehicle charge station application at municipal parking decks", APPLIED POWER ELECTRONICS CONFERENCE AND EXPOSITION (APEC), 2010 TWENTY-FIFTH ANNUAL IEEE, IEEE, PISCATAWAY, NJ, USA, 21. Februar 2010 (2010-02-21), Seiten 1145-1151, XP031649559, ISBN: 978-1-4244-4782-4
- WENSONG YU ET AL: "Single-switch three-level DC-DC converters for dimmable LED lighting", APPLIED POWER ELECTRONICS CONFERENCE AND EXPOSITION (APEC), 2011 TWENTY-SIXTH ANNUAL IEEE, IEEE, 6. März 2011 (2011-03-06), Seiten 735-740, XP032013962, DOI: 10.1109/APEC.2011.5744678 ISBN: 978-1-4244-8084-5

## Beschreibung

Die Erfindung betrifft einen Gleichspannungswandler.

Das Dokument US 2012/0169126 A1 offenbart einen bidirektionalen DC-DC-Wandler, umfassend einen ersten Satz von Kondensatoren, die mit einer positiven Schiene bzw. einer negativen Schiene eines Gleichspannungszwischenkreises verbunden sind. Daneben umfasst der Wandler Tiefsetzstellerschalter und Hochsetzstellerschalter und Dioden. Die Tiefsetzstellerschalter schalten in einem Tiefsetzstellerbetrieb periodisch an und aus und sind in einem Hochsetzstellerbetrieb ausgeschaltet. Die Hochsetzstellerschalter schalten im Hochsetzstellerbetrieb periodisch ein und aus und sind im Tiefsetzstellerbetrieb ausgeschaltet. Der Wandler umfasst ferner Induktivitäten. Der Wandler ist parallel zu einem anderen bidirektionalen DC-DC-Wandler an eine Batterie angeschlossen.

Elektrische Energiespeicher wie z. B. Traktionsbatterien eines Elektrofahrzeugs haben oft den Nachteil, dass sie eine Klemmenspannung aufweisen, die stark vom Ladezustand abhängig ist. Eine herkömmliche Traktionsbatterie mit Ladeschlussspannung 400V wird z. B. typischerweise bis auf 250V entladen. Um dennoch für nachfolgende Stromkreise und Verbraucher eine konstante Spannung bereitzustellen, werden dem Verbraucher und dem Energiespeicher häufig Gleichspannungswandler (DC-DC-Wandler) zwischengeschaltet.

Ein solcher Wandler ist z. B. aus der DE 10 2005 042 321 A1 bekannt. Die dort als Hochsetz-/Tiefsetzsteller bezeichnete Schaltung wird dazu verwendet, ausgehend von einer bestimmten Eingangs(gleich)spannung eine konfigurierbar vorbestimmte geregelte Ausgangs(gleich)spannung zu erhalten.

Der bekannte DC-DC-Wandler umfasst eingangsseitig eine gewöhnliche Halbbrücke. Die Halbleiterschalter der Halbbrücke müssen auf die maximale Spannung der angeschlossenen Gleichspannungskreise bemessen werden. Dadurch weisen diese Halbleiterschalter relativ hohe Schaltverluste auf, was für den Wirkungsgrad des Wandlers und die dadurch aufwändige Kühlung ungünstig ist.

DC-DC-Wandler mit einem als 3-Punkt-Wandler ausgebildeten Hochsetzsteller oder einem als 3-Punkt-Wandler ausgebildeten Tiefsetzsteller sind an sich beispielsweise aus
- H. Wu, X. He, "Single-Phase Three-Level Power Factor Correction Circuit With Passive Lossless Snubber", IEEE Transactions on Power Electronics, Vol. 17, Nr. 6, 2002, und
- P. Grbovic, P. Le Moigne, "A Bidirectional Three-Level DC-DC Converter for the Ultracapacitor Applications", IEEE Transactions on Industrial Electronics, Vol. 57, Nr. 10, 2010,
bekannt.

Daneben offenbaren die Dokumente DE 10 2006 014 780 A1 und US 2009/322148 A1 weitere Wandler.

Der Erfindung liegt die Aufgabe zugrunde, einen diesbezüglich verbesserten DC-DC-Wandler anzugeben.

Diese Aufgabe wird erfindungsgemäß gelöst durch einen Gleichspannungswandler gemäß dem Patentanspruch. Vorteilhafte und teils für sich gesehen erfinderische Ausgestaltungen und Weiterentwicklungen der Erfindung sind in der nachfolgenden Beschreibung dargelegt.

Der erfindungsgemäße DC-DC-Wandler umfasst einen Primärschaltkreis zum Anschluss an einen eingangsseitigen Gleichspannungskreis (nachfolgend kurz als "Eingangskreis" bezeichnet) sowie einen Stromzwischenkreis, wobei der Stromzwischenkreis dem Primärschaltkreis nachgeschaltet ist. Der Primärschaltkreis wird somit bestimmungsgemäß zwischen den Eingangskreis, bei dem es sich beispielsweise um den Batteriestromkreis eines Fahrzeugantriebssystems handelt, und den Stromzwischenkreis geschaltet.

Der erfindungsgemäße DC-DC-Wandler umfasst weiterhin einen Sekundärschaltkreis zum Anschluss an einen ausgangsseitigen Gleichspannungskreis (nachfolgend kurz als "Ausgangskreis" bezeichnet), wobei der Stromzwischenkreis dem Sekundärschaltkreis vorgeschaltet ist. Der Sekundärschaltkreis wird somit bestimmungsgemäß zwischen den Stromzwischenkreis und den Ausgangskreis geschaltet, bei dem es sich insbesondere um den Laststromkreis einer zu versorgenden elektrischen Last handelt, z. B. um den Gleichspannungs-Zwischenkreis eines Umrichters zur Motoransteuerung. Der Primärschaltkreis und der Sekundärschaltkreis sind mithin durch den gemeinsamen Stromzwischenkreis verbunden.

Erfindungsgemäß sind hierbei sowohl der Primärschaltkreis als auch der Sekundärschaltkreis jeweils als 3-Punkt-Wandler ausgebildet.

Als "3-Punkt-Wandler" wird in diesem Zusammenhang eine Schaltung bezeichnet, die eine zugeführte Eingangsspannung in eine Ausgangspannung wandelt, die im statischen Fall - insbesondere zu jedem einzelnen Zeitpunkt - drei diskrete Werte (oder Potentialniveaus) annehmen kann, beispielsweise im Verhältnis zu der Eingangsspannung die Werte "0", "1/2" und "1".

Als "Stromzwischenkreis" wird ein Stromkreis verstanden, dem durch eine induktive Speicherwirkung ein Stromfluss eingeprägt ist. Der oben genannte Stromzwischenkreis umfasst dabei eine Hochpotentialschiene und eine Niederpotentialschiene, wobei sowohl in die Hochpotential- als auch in die Niederpotentialschiene jeweils eine Induktivität geschaltet ist. Erfindungsgemäß umfasst der Primärschaltkreis eine Halbbrückenschaltung mit einem Hochpotentialzweig und einem dazu in Serie geschalteten Niederpotentialzweig. Dabei umfasst der Hochpotentialzweig einen hochpotentialseitigen Halbleiterschalter (nachfolgend auch als erster Halbleiterschalter bezeichnet) und einen niederpotentialseitigen Halbleiterschalter (nachfolgend auch als zweiter Halbleiterschalter bezeichnet), die in Serie angeordnet sind und zwischen denen die Hochpotentialschiene des Stromzwischenkreises angeklemmt ist. Der Niederpotentialzweig umfasst ebenfalls einen hochpotentialseitigen Halbleiterschalter (nachfolgend auch als dritter Halbleiterschalter bezeichnet) und einen niederpotentialseitigen Halbleiterschalter (nachfolgend auch als vierter Halbleiterschalter bezeichnet), die wiederum in Serie angeordnet sind und zwischen denen die Niederpotentialschiene des Stromzwischenkreises angeklemmt ist.

Der Sekundärschaltkreis umfasst ebenfalls eine Halbbrückenschaltung mit einem Hochpotentialzweig und einem dazu in Serie geschalteten Niederpotentialzweig. Dabei umfasst der Hochpotentialzweig wiederum einen hochpotentialseitigen Halbleiterschalter (nachfolgend auch als fünfter Halbleiterschalter bezeichnet) und einen niederpotentialseitigen Halbleiterschalter (nachfolgend auch als sechster Halbleiterschalter bezeichnet), die in Serie angeordnet sind und zwischen denen die Hochpotentialschiene des Stromzwischenkreises angeklemmt ist. Der Niederpotentialzweig umfasst ebenfalls einen hochpotentialseitigen Halbleiterschalter (nachfolgend auch als siebter Halbleiterschalter bezeichnet) und einen niederpotentialseitigen Halbleiterschalter (nachfolgend auch als achter Halbleiterschalter bezeichnet), die ebenfalls in Serie angeordnet sind und zwischen denen die Niederpotentialschiene des Stromzwischenkreises angeklemmt ist.

Dem Hochpotentialzweig und dem Niederpotentialzweig des Primärschaltkreises und des Sekundärschaltkreises ist jeweils eine Kapazität parallelgeschaltet.

Zusätzlich zu der Hochpotentialschiene und der Niederpotentialschiene weist der Stromzwischenkreis eine Mittenpotentialschiene auf, die jeweils zwischen dem Hochpotentialzweig und dem Niederpotentialzweig des Primärschaltkreises und des Sekundärschaltkreises angeklemmt ist.

Erfindungsgemäß kommen für die Halbleiterschalter Feldeffekttransistoren, insbesondere MOSFETs, zum Einsatz.

Durch die erfindungsgemäße Ausbildung des Primärschaltkreises bzw. Sekundärschaltkreises als 3-Punktwandler erniedrigt sich die nötige Sperrspannung der verwendeten Halbleiterschalter im Vergleich zu einem gewöhnlichen DC-DC-Wandler wesentlich - bei symmetrischer Auslegung der Kapazitäten insbesondere auf die Hälfte. Dadurch verringern sich insgesamt die Schaltverluste. Dies wiederum ermöglicht, insbesondere bei Anschluss an eine typische 400V-Batterie, den Einsatz von MOSFETs (anstatt z. B. IGBTs). Diese MOSFETs können außerdem mit besonders hohen Pulsfrequenzen betrieben werden, wodurch die Baugröße der passiven Elemente sinkt.

Erfindungsgemäß ist dem ersten Halbleiterschalter sowie dem vierten Halbleiterschalter und/oder dem fünften Halbleiterschalter sowie dem achten Halbleiter jeweils ein elektromechanischer Schalter (nachfolgend auch als Relais bezeichnet) parallel geschaltet. Dadurch ist es möglich, bei länger andauernden Einschaltzuständen den jeweils parallelen Halbleiterschalter verlustarm zu überbrücken und somit den Wirkungsgrad der Schaltung anzuheben.

Nachfolgend wird ein Ausführungsbeispiel der Erfindung anhand einer Zeichnung näher erläutert. Darin zeigt:

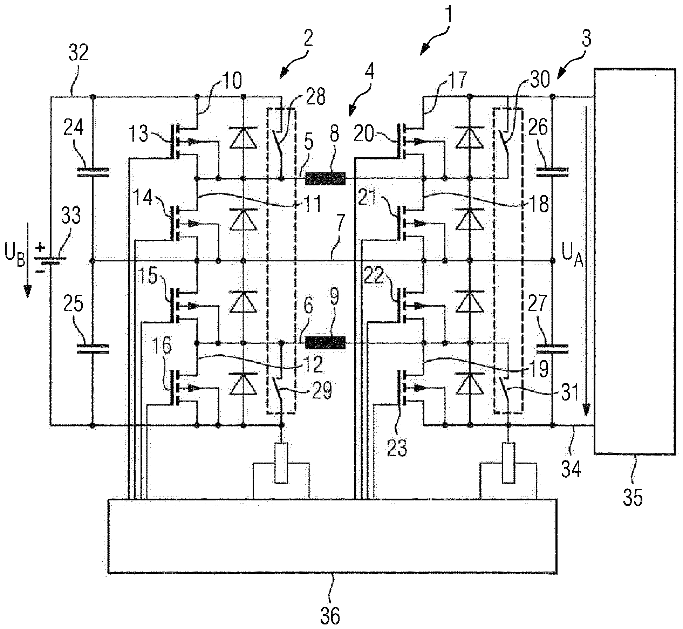

- FIG 1: in einem Schaltbild einen Gleichspannungswandler (DC-DC-Wandler) mit einem Primärschaltkreis, einem Sekundärschaltkreis und einem zwischengeschalteten Stromzwischenkreis, wobei der Primärschaltkreis und der Sekundärschaltkreis als 3-Punkt-Wandler ausgebildet sind.

FIG 1 zeigt einen Gleichspannungswandler 1 mit einem Primärschaltkreis 2, einem Sekundärschaltkreis 3 sowie einem Stromzwischenkreis 4.

Wie der Darstellung zu entnehmen ist, umfasst der Stromzwischenkreis 4 eine Hochpotentialschiene 5, eine Niederpotentialschiene 6, sowie eine Mittenpotentialschiene 7. In die Hochpotentialschiene 5 und die Niederpotentialschiene 6 sind dabei eine erste Induktivität 8 bzw. eine zweite Induktivität 9 geschaltet. Die Mittenpotentialschiene 7 umfasst in diesem Fall keine Induktivität.

Der Primärschaltkreis 2 des Gleichspannungswandlers 1 umfasst dabei eine erste Halbbrückenschaltung 10 mit einem Hochpotentialzweig 11 und einen dazu in Serie geschalteten Niederpotentialzweig 12. In dem Hochpotentialzweig 11 befinden sich in Serie ein erster (hochpotentialseitiger) Halbleiterschalter 13 und ein zweiter (niederpotentialseitiger) Halbleiterschalter 14. In dem Niederpotentialzweig 12 befinden sich in Serie ein dritter (hochpotentialseitiger) Halbleiterschalter 15 und ein vierter (niederpotentialseitiger) Halbleiterschalter 16.

Jedem der Halbleiterschalter 13-16 ist jeweils eine (nicht näher bezeichnete) Freilaufdiode parallel geschaltet.

Zwischen dem ersten Halbleiterschalter 13 und dem zweiten Halbleiterschalter 14 ist die Hochpotentialschiene 5 des Stromzwischenkreises 4 angeklemmt. Zwischen dem Hochpotentialzweig 11 und dem Niederpotentialzweig 12, somit zwischen dem zweiten Halbleiterschalter 14 und dritten Halbleiterschalter 15 ist die Mittenpotentialschiene 7 des Stromzwischenkreises 4 angeklemmt. Zwischen dem dritten Halbleiterschalter 15 und dem vierten Halbleiterschalter 16 ist die Niederpotentialschiene 6 des Stromzwischenkreises 4 angeklemmt.

Der Sekundärschaltkreis 3 des Gleichspannungswandlers 1 umfasst eine zweite Halbbrückenschaltung 17 mit einem Hochpotentialzweig 18 und einen dazu in Serie geschalteten Niederpotentialzweig 19. In dem Hochpotentialzweig 18 befinden sich ein fünfter (hochpotentialseitiger) Halbleiterschalter 20 und ein sechster (niederpotentialseitiger) Halbleiterschalter 21. In dem Niederpotentialzweig 19 befinden sich ein siebter (hochpotentialseitiger) Halbleiterschalter 22 und ein achter (niederpotentialseitiger) Halbleiterschalter 23.

Jedem der Halbleiterschalter 20-23 ist wiederum jeweils eine (nicht näher bezeichnete) Freilaufdiode parallel geschaltet.

Zwischen dem fünften Halbleiterschalter 20 und dem sechsten Halbleiterschalter 21 ist wiederum die Hochpotentialschiene 5 des Stromzwischenkreises 4 angeklemmt. Zwischen dem sechsten Halbleiterschalter 21 und siebten Halbleiterschalter 22 ist wiederum die Mittenpotentialschiene 7 des Stromzwischenkreises 4 angeklemmt. Zwischen dem siebten Halbleiterschalter 22 und dem achten Halbleiterschalter 23 ist wiederum die Niederpotentialschiene 6 des Stromzwischenkreises 4 angeklemmt.

Dem Hochpotentialzweig 11 der ersten Halbbrückenschaltung 10 ist eine erste Kapazität 24 parallel geschaltet. Dem Niederpotentialzweig 12 der ersten Halbbrückenschaltung 10 ist eine zweite Kapazität 25 parallel geschaltet. Dem Hochpotentialzweig 18 der zweiten Halbbrückenschaltung 17 ist eine dritte Kapazität 26 parallel geschaltet, und dem Niederpotentialzweig 19 der zweiten Halbbrückenschaltung 17 ist eine vierte Kapazität 27 parallel geschaltet. Die Kapazitäten 24 und 25 sind vorzugsweise gleich ausgelegt. Gleiches gilt für die Kapazitäten 26 und 27.

Dem ersten Halbleiterschalter 13 ist ein erstes Relais 28 parallel geschaltet, dem vierten Halbleiterschalter 16 ist ein zweites Relais 29 parallel geschaltet, dem fünften Halbleiterschalter 20 ist ein drittes Relais 30 parallel geschaltet und dem achten Halbleiterschalter 23 ist ein viertes Relais 31 parallel geschaltet. Dadurch kann bei längeren Einschaltbefehlen für die Halbleiterschalter 13, 16, 20 und 23 der Wirkungsgrad erhöht werden, da sich Leitungsverluste unter Verwendung der Relais reduzieren.

Die Halbleiterschalter 13-16 und 20-23 können durch die Realisierung der Schaltung als 3-Punktwandler und der damit einhergehenden Halbierung der maximalen Spannung an den Halbleiterschaltern als Feldeffekttransistoren, insbesondere MOSFETs realisiert werden.

Die Eingänge des Primärschaltkreises 2, nämlich der hochpotentialseitige Anschluss (Drain) des ersten Halbleiterschalters 13 und der niederpotentialseitige Anschluss (Source) des vierten Halbleiterschalters 16, sind über einen (nachfolgend) als Eingangskreis bezeichneten Gleichspannungskreis mit einem elektrischen Energiespeicher in Form einer (Hochvolt-) Batterie 33 verbunden. Durch die Batterie 33 wird im Eingangskreis 32 eine Batteriespannung U_{B} erzeugt.

Die Ausgänge des Sekundärschaltkreises 3, nämlich der hochpotentialseitige Anschluss (Drain) des fünften Halbleiterschalters 20 und der niederpotentialseitige Anschluss des achten Halbleiterschalters 23, sind andererseits über einen ausgangsseitigen Gleichspannungskreis (nachfolgend Ausgangskreis 34) mit einer Last 35 verbunden. Bei der Last 35 handelt es sich insbesondere um einen Wechselrichter zur Ansteuerung eines elektrischen Antriebsmotors für ein Elektrokraftfahrzeug. Die über den Ausgängen des Sekundärschaltkreises 3 abfallende Spannung ist als Ausgangsspannung U_{A} bezeichnet.

Die Ansteuerung der Halbleiterschalter 13-16 und 20-23 sowie der Relais 28-31 erfolgt durch eine Zentralsteuereinheit 34, die insbesondere durch einen Mikrocontroller mit einem darin lauffähig implementierten Steuerprogramm (Firmware) gebildet ist. Diese sorgt für das funktions- und zeitgerechte Öffnen und Schließen der angeschlossenen Bauelemente.

Nachfolgend wird die Funktion der Gleichspannungswandlers in FIG 1 erklärt.

Solange die Batteriespannung U_{B} die Ausgangsspannung U_{A} übersteigt (U_{B} > U_{A}) und die Spannungsaufteilung zwischen der ersten Kapazität 24 und der zweiten Kapazität 25 bzw. der dritten Kapazität 26 und der vierten Kapazität 27 symmetrisch ist, wird der Primärschaltkreis 2 pulsweitenmoduliert getaktet durch die Zentraleinheit 34 angesteuert. Im Sekundärschaltkreis 3 sind dagegen der fünfte Halbleiterschalter 20 und der achte Halbleiterschalter 23 dauerhaft eingeschaltet, während der sechste Halbleiterschalter 21 und der siebte Halbleiterschalter 22 dauerhaft ausgeschaltet sind.

Während einer ersten Zeitspanne eines jeden Taktzyklus des durch die Zentralsteuereinheit 36 erzeugten Ansteuerungssignals wird ein Strom über die Induktivität 8 und die Induktivität 9 erzeugt, durch den die dritte Kapazität 26 und die vierte Kapazität 27 geladen werden. Dies geschieht durch gleichzeitiges Einschalten des ersten Halbleiterschalters 13 und des vierten Halbleiterschalters 16. Währenddessen sind der zweite Halbleiterschalter 14 und der dritte Halbleiterschalter 15 geöffnet.

Während einer zweiten Zeitspanne des Taktzyklus des durch die Zentralsteuereinheit 36 erzeugten Ansteuerungssignals wird für den Strom ein sogenannter Freilauf geschaffen, indem die Halbleiterschalter 13 und 16 geöffnet und die Halbleiterschalter 14 und 15 geschlossen werden. Der durch die Halbleiterschalter 14 und 15 fließende (Freilauf-)Strom wird dabei durch die Induktivitäten 8 und 9 getrieben.

Die Halbleiterschalter 13 schalten folglich immer invers zu den Halbleiterschaltern 14 und 15.

Wenn eine Spannungsunsymmetrie zwischen der ersten Kapazität 24 und der zweiten Kapazität 25 auftritt, wird diese durch eine zeitlich geringfügig verschobene Schaltung der Halbleiterschalter 13 und 14 im Vergleich zu der Schaltung der Halbleiterschalter 15 und 16 kompensiert.

Eine Kompensation einer etwaigen Spannungsunsymmetrie zwischen der dritten Kapazität 26 und der vierten Kapazität 27 wird durch ein Verschieben der Schaltbefehle für den fünften Halbleiterschalter 20 und sechsten Halbleiterschalter 21 gegenüber dem siebten Halbleiterschalter 22 und achten Halbleiterschalter 23 erreicht. Dazu wird der Dauer-Einschaltbefehl für den fünften Halbleiterschalter 19 und achten Halbleiterschalter 23 temporär verlassen.

Ist die Batteriespannung U_{B} dagegen kleiner als die Ausgangsspannung U_{A} (U_{B} < U_{A}), erfolgt eine pulsweitenmodulierte Ansteuerung der Halbleiterschalter 20-23 des Sekundärschaltkreises 3. Im Primärschaltkreis 2 sind dann der erste Halbleiterschalter 13 und der vierte Halbleiterschalter 16 dauerhaft geschlossen und der zweite Halbleiterschalter 15 und dritte Halbleiterschalter 14 dauerhaft geöffnet.

Sofern eine Spannungsunsymmetrie zwischen der dritten Kapazität 26 und der vierten Kapazität 27 auftritt, wird diese durch ein leichtes Verschieben der Einschaltbefehle des fünften Halbleiterschalter 20 und sechsten Halbleiterschalters 21 gegenüber dem siebten Halbleiterschalter 22 und achten Halbleiterschalters 23 kompensiert.

Eine Kompensation der Spannungsunsymmetrie zwischen der ersten Kapazität 24 und der zweiten Kapazität 25 wird durch ein Verschieben der Schaltbefehle für den ersten Halbleiterschalter 13 und zweiten Halbleiterschalter 14 gegenüber dem dritten Halbleiterschalter 15 und vierten Halbleiterschalter 16 erreicht. Dazu wird der Dauer-Einschaltbefehl für den ersten Halbleiterschalter 13 und vierten Halbleiterschalter 16 temporär verlassen.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden.

## Patentansprüche

1. Bidirektionaler Gleichspannungswandler (1), mit einem Primärschaltkreis (2) zum Anschluss an einen eingangsseitigen Gleichspannungskreis (32) und mit einem Sekundärschaltkreis (3) zum Anschluss an einem ausgangsseitigen Gleichspannungskreis (34) sowie mit einem dem Primärschaltkreis (2) nachgeschalteten bzw. dem Sekundärschaltkreis (3) vorgeschalteten Stromzwischenkreis (4), wobei der Primärschaltkreis (2) und der Sekundärschaltkreis (3) jeweils als 3-Punktwandler ausgebildet sind, wobei
- der Stromzwischenkreis (4) eine Hochpotentialschiene (5) und eine Niederpotentialschiene (6) umfasst, und in die Hochpotentialschiene (5) und die Niederpotentialschiene (6) des Stromzwischenkreises (4) jeweils eine Induktivität (8, 9) geschaltet ist,
- der Primärschaltkreis (2) eine Halbbrückenschaltung (10) mit einem Hochpotentialzweig (11) und einem dazu in Serie geschalteten Niederpotentialzweig (12) umfasst, und in dem Hochpotentialzweig (11) in Serie ein hochpotentialseitiger Halbleiterschalter (13) und ein niederpotentialseitiger Halbleiterschalter (14) angeordnet sind, zwischen denen die Hochpotentialschiene (5) des Stromzwischenkreises (4) angeklemmt ist, und in dem Niederpotentialzweig (12) in Serie ein hochpotentialseitiger Halbleiterschalter (15) und ein niederpotentialseitiger Halbleiterschalter (16) angeordnet sind, zwischen denen die Niederpotentialschiene (6) des Stromzwischenkreises (4) angeklemmt ist,
- wobei der Sekundärschaltkreis (3) eine Halbbrückenschaltung (17) mit einem Hochpotentialzweig (18) und einem dazu in Serie geschalteten Niederpotentialzweig (19) umfasst, und in dem Hochpotentialzweig (18) in Serie ein hochpotentialseitiger Halbleiterschalter (20) und ein niederpotentialseitiger Halbleiterschalter (21) angeordnet sind, zwischen denen die Hochpotentialschiene (5) des Stromzwischenkreises (4) angeklemmt ist, und in dem Niederpotentialzweig (19) in Serie ein hochpotentialseitiger Halbleiterschalter (22) und ein niederpotentialseitiger Halbleiterschalter (23) angeordnet sind, zwischen denen die Niederpotentialschiene (6) des Stromzwischenkreises (4) angeklemmt ist,
- dem Hochpotentialzweig (11, 18) und dem Niederpotentialzweig (12, 19) des Primärschaltkreises (2) und des Sekundärschaltkreises (3) jeweils eine Kapazität (24, 25, 26, 27) parallelgeschaltet ist,
- der Stromzwischenkreis (4) eine Mittenpotentialschiene (7) umfasst, die jeweils zwischen dem Hochpotentialzweig (11, 18) und dem Niederpotentialzweig (12, 19) des Primärschaltkreises (2) und des Sekundärschaltkreises (3) angeklemmt ist,
- wobei dem hochpotentialseitigen Halbleiterschalter (13, 20) im Hochpotentialzweig (11, 18) des Primärschaltkreises (2) und/oder Sekundärschaltkreises (3) und dem niederpotentialseitigen Halbleiterschalter (16, 23) im Niederpotentialzweig (12, 19) des Primärschaltkreises (2) und/oder Sekundärschaltkreises (3) jeweils ein elektromechanischer Schalter (28-31) parallelgeschaltet ist,
- wobei die Halbleiterschalter (13-16, 20-23) durch Feldeffekttransistoren gebildet sind.

## Claims

1. A bidirectional direct current converter (1), having a primary circuit (2) to be connected to an input-side direct current circuit (32) and a secondary circuit (3) to be connected to an output-side direct current circuit (34), and having a current intermediate circuit (4) downstream of the primary circuit (2) or upstream of the secondary circuit (3), respectively, the primary circuit (2) and the secondary circuit (3) are each being in the form of a 3-point converter, wherein
- the current intermediate circuit (4) comprises a high voltage bus bar (5) and a low voltage bus bar (6), and an inductor (8, 9) is connected into the respective high voltage bus bar (5) and low voltage bus bar (6) of the current intermediate circuit (4),
- the primary circuit (2) comprises a half-bridge circuit (10) having a high voltage branch (11) and a low voltage branch (12) connected in series therewith, and a high voltage-side semiconductor switch (13) and a low voltage-side semiconductor switch (14) are arranged in series in the high voltage branch (11), the high voltage bus bar (5) of the current intermediate circuit (4) being clamped therebetween, and a high voltage-side semiconductor switch (15) and a low voltage-side semiconductor switch (16) are arranged in the low voltage bus bar (12), the low voltage bus bar (6) of the current intermediate circuit (4) being clamped therebetween,
- wherein the secondary circuit (3) comprises a half-bridge circuit (17) having a high voltage branch (18) and a low voltage branch (19) connected in series therewith, and a high voltage-side semiconductor switch (20) and a low voltage side semiconductor switch (21) are arranged in series in the high voltage branch (18), the high voltage bus bar (5) of the current intermediate circuit (4) being clamped therebetween, and a high voltage-side semiconductor switch (22) and a low voltage-side semiconductor switch (23) are arranged in the low voltage branch (19), the low voltage bus bar (6) of the current intermediate circuit (4) being clamped therebetween,
- a capacitor (24, 25, 26, 27) is connected in parallel with the respective high voltage branch (11, 18) and the low voltage branch (12, 19) of the primary circuit (2) and the secondary circuit (3),
- the current intermediate circuit (4) comprises a medium voltage bus bar (7), which is clamped between each of the high voltage branch (11, 18) and the low voltage branch (12, 19) of the primary circuit (2) and the secondary circuit (3),
- wherein an electromechanical switch (28-31) is connected in parallel with the high voltage-side semiconductor switch (13, 20) in the high voltage branch (11, 18) of the primary circuit (2) and/or the secondary circuit (3) and with the low voltage-side semiconductor switch (16, 23) in the low voltage branch (12, 19) of the primary circuit (2) and/or the secondary circuit (3),
- wherein the semiconductor switches (13-16, 20-23) are formed by field effect transistors.

## Revendications

1. Convertisseur de tension continue bidirectionnel (1), avec un circuit primaire (2) pour le raccordement à un circuit de tension continue côté entrée (32) et avec un circuit secondaire (3) pour le raccordement à un circuit de tension continue côté sortie (34) ainsi qu'avec un circuit intermédiaire électrique (4) en aval du circuit primaire (2) ou en amont du circuit secondaire (3), en ce que le circuit primaire (2) et le circuit secondaire (3) sont conçus respectivement comme convertisseur 3 points, en ce que
- le circuit intermédiaire électrique (4) comporte un rail à haut potentiel (5) et un rail à bas potentiel (6), et une inductance (8, 9) est connectée respectivement au rail à haut potentiel (5) et au rail à bas potentiel (6) du circuit intermédiaire électrique (4),
- le circuit primaire (2) comporte un montage en demi-pont (10) avec une branche à haut potentiel (11) et une branche à bas potentiel (12) qui est montée en série, et un interrupteur à semiconducteurs côté haut potentiel (13) et un interrupteur à semiconducteurs côté bas potentiel (14) sont disposés en série dans la branche à haut potentiel (11), entre lesquels le rail à haut potentiel (5) du circuit intermédiaire électrique (4) est connecté, et un interrupteur à semiconducteurs côté haut potentiel (15) et un interrupteur à semiconducteurs côté bas potentiel (16) sont disposés en série dans la branche à bas potentiel (12), entre lesquels le rail à bas potentiel (6) du circuit intermédiaire électrique (4) est connecté,
- en ce que le circuit secondaire (3) comporte un montage en demi-pont (17) avec une branche à haut potentiel (18) et une branche à bas potentiel (19) qui y est montée en série, et un interrupteur à semiconducteurs côté haut potentiel (20) et un interrupteur à semiconducteurs côté bas potentiel (21) sont disposés en série dans la branche à haut potentiel (18), entre lesquels le rail à haut potentiel (5) du circuit intermédiaire électrique (4) est connecté, et un interrupteur à semiconducteurs côté haut potentiel (22) et un interrupteur à semiconducteurs côté bas potentiel (23) sont disposés en série dans la branche à bas potentiel (19), entre lesquels le rail à bas potentiel (6) du circuit intermédiaire électrique (4) est connecté,
- un condensateur (24, 25, 26, 27) est monté en parallèle respectivement dans la branche à haut potentiel (11, 18) et la branche à bas potentiel (12, 19) du circuit primaire (2) et du circuit secondaire (3),
- le circuit intermédiaire électrique (4) comporte un rail à potentiel central (7) qui est connecté respectivement entre la branche à haut potentiel (11, 18) et la branche à bas potentiel (12, 19) du circuit primaire (2) et du circuit secondaire (3),
- en ce qu'un interrupteur électromécanique (28-31) est monté en parallèle à l'interrupteur à semiconducteurs côté haut potentiel (13, 20) dans la branche à haut potentiel (11, 18) du circuit primaire (2) et/ou du circuit secondaire (3) et à l'interrupteur à semiconducteurs côté bas potentiel (16, 23) dans la branche à bas potentiel (12, 19) du circuit primaire (2) et/ou du circuit secondaire (3),
- en ce que les interrupteurs à semiconducteurs (13-16, 20-23) sont formés par des transistors à effet de champ.
